# EUROPEAN PATENT SPECIFICATION

(11) **EP 4 527 505 B1**
(45) Date of publication and mention of the grant of the patent: **24.06.2026**
(21) Application number: 24184871.2
(22) Date of filing: 27.06.2024
(51) Int. Cl.: B02C 19/06

(54) **JET MILL AND METHOD OF PULVERIZING SULFIDE-BASED SOLID ELECTROLYTE USING THE SAME**
STRAHLMÜHLE UND VERFAHREN ZUM PULVERISIEREN EINES SULFIDBASIERTEN FESTELEKTROLYTEN DAMIT
BROYEUR À JET ET PROCÉDÉ DE PULVÉRISATION D'ÉLECTROLYTE SOLIDE À BASE DE SULFURE L'UTILISANT

(30) Priority: 25.09.2023 KR 20230127699
(43) Date of publication of application: 26.03.2025
(73) Proprietor: ECOPRO BM CO., LTD., Cheongju-si, Chungcheongbuk-do 28117 (KR)
(72) Inventor: SEOL, Jaechang, Cheongju-si, 28117 (KR); KWON, Woosin, Cheongju-si, 28117 (KR); JUNG, Hyunsu, Cheongju-si, 28117 (KR); YANG, A Reum, Cheongju-si, 28117 (KR)
(74) Representative: Murgitroyd & Company

(56) References cited:
- CN-B- 104 941 762
- CN-B- 108 212 434
- DE-A1- 102017 209 874
- KR-A- 20230 023 983
- US-A- 3 186 648

## Description

### TECHNICAL FIELD

The present disclosure relates to a jet mill capable of removing static electricity and a method of pulverizing a sulfide-based solid electrolyte using the same, and more specifically, to a jet mill capable of removing static electricity and a method of pulverizing a sulfide-based solid electrolyte using the same, which facilitates particle size control and increases pulverizing efficiency by removing static electricity inside a milling main body where pulverizing is performed.

### BACKGROUND

Jet mills are known from CN 108 212 434 B, KR 2023 0023983 A, CN 104 941 762 B, US 3 186 648 A, DE 10 2017 209874 A1.

Recently, secondary batteries have become common in electronic devices such as smartphones.

A secondary battery uses lithium as a cathode, is charged by lithium ions moving from the cathode to an anode, and is discharged while lithium moves from the anode to the cathode to generate power.

These lithium secondary batteries have the advantages of high energy density and long lifespan, and are generally used in various types of electronic devices, and recently, demand has been increasing due to rapid growth of an electric vehicle market.

However, since these lithium secondary batteries use organic solvents as electrolytes for ion movement, accidents may occur due to electrolyte leakage or volatilization, which presents safety issues.

The solid electrolytes that are being developed recently are a technology that aims to replace existing liquid electrolytes by using solid sulfide compounds, and since only lithium ions move inside the electrolyte, there are no side reactions and they have the advantages of excellent safety and durability.

Among the solid electrolytes used in lithium secondary batteries, the compound represented by Li₇-XPS₆-xClx has a cubic argyrodite crystal structure and is attracting attention as a mass-produced sulfide-based solid electrolyte due to high ionic conductivity and electrochemical stability over a wide temperature range.

These solid electrolytes are manufactured into particles of a certain size through a milling process after their synthesis is complete.

A milling process for existing solid electrolytes has generally used a ball mill, but in the case of this ball mill, not only does it require several tens of hours of processing time to manufacture particles of less than 10 µm required for solid electrolyte particles, but it also has problems such as the formation of carbon compounds due to solvent reaction and the resulting decrease in electrical conductivity.

Accordingly, recently, a method of dry-pulverizing particles using a jet mill has been mainly used to control the particle size of solid electrolytes.

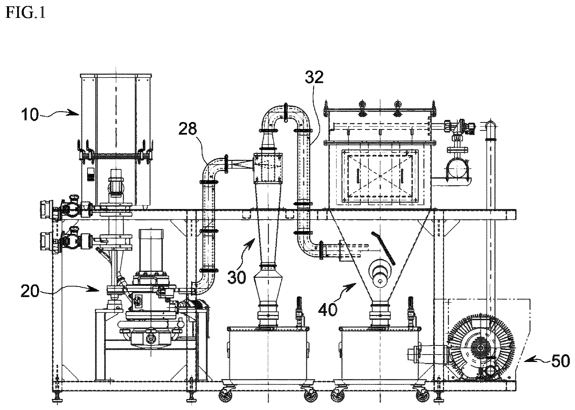

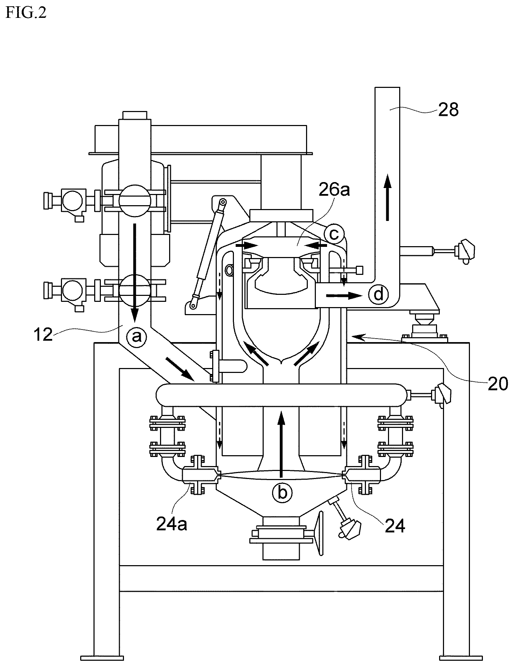

Fig. 1 is a schematic view of a conventional jet mill, and Fig. 2 is a view for explaining a process of pulverizing raw materials in the conventional jet mill.

As illustrated in Fig. 1, a conventional jet mill is configured to include a raw material supply unit 10, a milling main body 20, a cyclone 30, a bag filter 40, and a blower 50.

The jet mill configured in this manner pulverizes raw material through a process as illustrated in Fig. 2.

That is, ⓐ a raw material is fed into the hollow milling main body 20 through a predetermined raw material supply pipe 12 from the raw material supply unit 10, ⓑ when the raw material fed into the milling main body 20 is filled to a certain height or higher, the raw materials are pulverized by collision with each other due to a strong jet air sprayed from an air nozzle 24a installed in a lower portion of the milling main body 20, ⓒ the pulverized raw material particles are raised due to an air current, and particles having a particle size equal to or less than a certain size pass through a classifying wheel 26a, and particles having a particle size equal to or more than the certain size descend back to the lower portion of the milling main body 20 along an inner wall of the milling main body 20, and ⓓ the particles that pass through the classifying wheel 26a move to a product collection unit.

Here, an unexplained symbol 28 is a first product transfer pipe (connecting the classifying wheel 26a and the cyclone 30), and symbol 32 is a second product transfer pipe (connecting the cyclone 30 and the bag filter 40).

In this way, the conventional jet mill can obtain particles of a desired size by injecting high-pressure air through the air nozzle 24a to cause mutual collision between pulverized particles.

The jet mill is mainly used when pulverizing sulfide-based solid electrolyte (LPSCl) and is useful for controlling the desired particle size with only air.

However, the pulverization using the conventional jet mill may generate static electricity inside the milling main body 20, and there is a problem that the particles are clumped together due to a ductile nature of the solid electrolyte and stick to the inner wall of the milling main body 20.

Accordingly, there is a problem that it is difficult to control the particle size when pulverizing the solid electrolyte, and the pulverization efficiency is reduced.

### SUMMARY

The present disclosure is intended to solve the above-mentioned various problems of the prior art, and a purpose thereof is to provide a jet mill capable of removing static electricity, which can facilitate particle size control and increase pulverizing efficiency by removing static electricity inside a milling main body where pulverization is performed, and a sulfide-based solid electrolyte pulverizing method using the same.

In order to achieve the above-described objects, according to a first aspect of the present disclosure, there is provided in accordance with claim 1 a jet mill in which a raw material is fed into a hollow milling main body through a predetermined raw material supply pipe from a raw material supply unit and the raw materials are pulverized by collision with each other due to a strong jet air sprayed from an air nozzle installed in the milling main body when the raw materials fed into the milling main body fill the the milling main body to a certain height or higher, in which upper and lower portions of the milling main body are grounded to remove static electricity inside the milling main body, and wherein a predetermined ionizer is installed in the raw material supply pipe to supply the raw material to the raw material input holes of the upper plate and supply ionized air together, thereby preventing raw materials from accumulating on the upper plate.

A recessed lower plate may be horizontally positioned on a lower side inside the milling main body, a plurality of air nozzles may be installed spaced apart along an edge of the lower plate, and the air nozzles may be arranged to face a center of the lower plate.

The lower plate may be formed of ceramic.

A cover may be installed on an open upper end of the milling main body, and a classifying wheel may be provided inside the cover.

An upper plate may be horizontally arranged on an inner upper portion of the milling main body, one or more raw material input holes may be formed vertically through the upper plate along a circumferential direction, and the raw materials supplied from the raw material supply pipe may be fed into the raw material input holes.

The upper plate may be formed of ceramic.

According to a second aspect of the present disclosure, there is provided in accordance with claim 7 a method of pulverizing a sulfide-based solid electrolyte using a jet mill in which a sulfide-based solid electrolyte is fed into a hollow milling main body through a predetermined raw material supply pipe from a raw material supply unit and the sulfide-based solid electrolytes are pulverized by collision with each other due to a strong jet air sprayed from an air nozzle installed in an inner lower portion of the milling main body when the sulfide-based solid electrolyte fed into the milling main body fill the milling main body to a certain height or higher, the method includes removing static electricity inside the milling main body by grounding upper and lower portions of the milling main body, and installing a predetermined ionizer in the raw material supply pipe to supply the sulfide-based solid electrolyte inside the milling main body and supply ionized air together.

Specific details of other embodiments are included in the "DETAILED DESCRIPTION" and the attached "DRAWINGS".

The advantages and/or features of the present disclosure and the methods for achieving them will become clear with reference to the various embodiments described in detail below together with the attached drawings.

However, the present disclosure is not limited to the configuration of each embodiment disclosed below and may also be implemented in various different forms, and it should be noted that each embodiment disclosed in the present specification is provided only to ensure that the disclosure of the present disclosure is complete and to fully inform a person having ordinary skill in the art to which the present disclosure belongs of the scope of the present disclosure, and the present disclosure is defined only by the scope of each claim of the claims.

According to the means for solving the above-described problem, the present disclosure has the following effects.

The present disclosure has the effect of preventing agglomeration of raw material particles such as sulfide-based solid electrolytes and preventing the raw material particles from sticking to an inner wall of the milling main body by grounding the upper and lower portions of the milling main body and removing the static electricity inside the milling main body.

Accordingly, the static electricity inside the milling main body where pulverization is performed can be removed, facilitating particle size control.

In addition, the present disclosure has the effect of increasing pulverization efficiency and productivity by installing a predetermined ionizer in the raw material supply pipe to supply raw material to the raw material input hole of the upper plate located inside the milling main body and simultaneously supplying the ionized air together, thereby preventing raw material such as sulfide-based solid electrolytes from accumulating on the upper plate due to static electricity.

### BRIEF DESCRIPTION OF THE DRAWINGS

Fig. 1 is a schematic view of a conventional jet mill.
Fig. 2 is a view illustrating a process of pulverizing raw material in the conventional jet mill.
Fig. 3 is a schematic view illustrating a milling main body in a jet mill according to the present disclosure.
Fig. 4 is a view illustrating an upper plate arranged inside the milling main body in the jet mill according to the present disclosure.
Fig. 5 is a view illustrating a lower plate arranged below the milling main body in the jet mill according to the present disclosure.
Fig. 6 is a view illustrating a cover of the milling main body in the jet mill according to the present disclosure.
Fig. 7 is a photograph comparing an upper plate (Example) inside the milling main body of the jet mill according to the present disclosure and an upper plate (Comparative Example) inside the milling main body of the jet mill according to the prior art, and a graph illustrating the results of particle size analysis.

### DETAILED DESCRIPTION

Hereinafter, a preferred embodiment of a jet mill capable of removing static electricity according to the present disclosure and a method of pulverizing a sulfide-based solid electrolyte using the same will be described in detail with reference to the attached drawings. For reference, the terms and words used in this specification and claims should not be interpreted as limited to their usual or dictionary meanings, and should be interpreted as meanings and concepts that conform to the technical idea of the present disclosure based on the principle that the inventor can appropriately define the concept of the term in order to explain his or her own invention in the best possible way. In addition, the embodiments described in this specification and the configurations illustrated in the drawings are only the most preferred embodiments of the present disclosure and do not represent all of the technical ideas of the present disclosure, so it should be understood that there may be various equivalents and modified examples that can replace them at the time of filing this application.

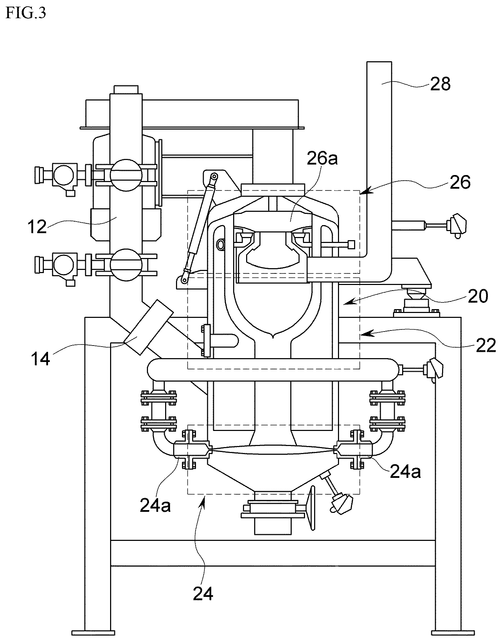

Fig. 3 is a schematic view illustrating a milling main body in a jet mill according to the present disclosure.

The jet mill capable of removing static electricity according to the present disclosure is configured such that raw materials are fed into a hollow milling main body 20 through a predetermined raw material supply pipe 12 from a raw material supply unit, and when the raw materials fed into the milling main body 20 fill the milling main body 20 to a certain height or higher, the raw materials are pulverized by collision with each other due to a strong jet air sprayed from an air nozzle 24a installed at a lower portion of the milling main body 20.

In this case, the raw material may be a sulfide-based solid electrolyte.

Such a sulfide-based solid electrolyte is a type of inorganic solid electrolyte.

The inorganic solid electrolytes are generally classified into oxide-based and sulfide-based.

The sulfide-based solid electrolyte is widely studied as a promising material in the field of next-generation all-solid-state battery development, and has the advantages of high ionic conductivity, low mechanical deformability, and low weight density, similar to a liquid electrolyte.

When raw materials such as sulfide-based solid electrolytes are fed into the milling main body 20, static electricity may be generated, and due to ductile nature of the solid electrolytes, agglomeration occurs between particles and the particles stick to the inner wall of the milling main body 20.

Accordingly, an objective of the present disclosure is to facilitate particle size control and increase pulverization efficiency by grounding the upper and lower portions of the milling main body 20 to remove the static electricity inside the milling main body 20.

The milling main body 20 is formed in a hollow cylindrical shape, and one end of the raw material supply pipe 12 is connected to one side of the milling main body 20 so as to communicate with the inside of the milling main body 20.

In addition, an upper plate 22 is horizontally arranged on the inner upper portion of the milling main body 20, a lower plate 24 is horizontally arranged on the inner lower side of the milling main body 20, and a cover 26 is arranged on the open upper end of the milling main body 20 to seal the upper portion of the milling main body 20.

In addition, a predetermined ionizer 14 is installed in the raw material supply pipe 12 to supply raw material to the raw material input hole of the upper plate 22 arranged in the inner upper portion of the milling main body 20 and supply ionized air together, thereby preventing raw material clumped between particles by static electricity from accumulating on the upper portion of the upper plate 22.

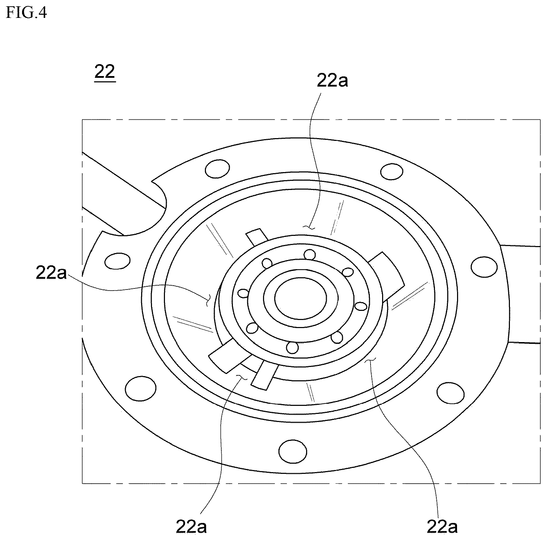

Fig. 4 is a view illustrating the upper plate arranged inside the milling main body in the jet mill according to the present disclosure.

The upper plate 22 is horizontally arranged on the inner upper portion of the milling main body 20.

In this case, the outer surface of the upper plate 22 is formed in a shape corresponding to the inner surface of the milling main body 20, so that when the upper plate 22 is placed inside the milling main body 20, an airtight state can be maintained between the outer surface of the upper plate 22 and the inner surface of the milling main body 20.

For example, the upper plate 22 can be formed in a disk shape, and the inner surface of the milling main body 20 can be formed in a cylindrical shape.

In such an upper plate 22, one or more raw material input holes 22a are formed to penetrate upward and downward along the circumferential direction, and the raw material supplied from the raw material supply pipe 12 is fed into the raw material input hole 22a and fills the milling main body 20 to a certain height.

When the raw material fills the milling main body 20 to a certain height or more, the raw materials are pulverized by collision with each other due to the strong jet air sprayed from the air nozzle 24a.

This upper plate 22 may be formed of ceramic.

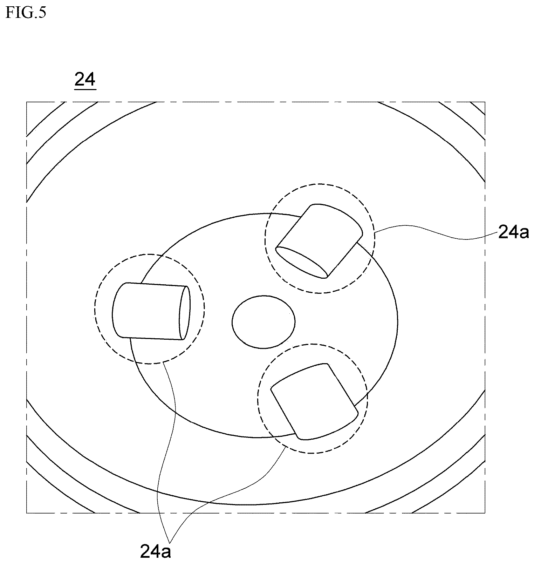

Fig. 5 is a view illustrating the lower plate arranged below the milling main body in the jet mill according to the present disclosure.

The lower plate 24 having a recessed shape (a shape that slopes downward from an edge to the inside) is horizontally positioned at the lower side inside the milling main body 20.

The plurality of air nozzles 24a are installed radially spaced apart along the edge of the lower plate 24, and the air outlets of the air nozzles 24a may be arranged to face the center of the lower plate 24.

The raw material input into the milling main body 20 through the raw material input hole 22a formed in the upper plate 22 descends to the lower plate 24 and fills the inside of the milling main body (20) to a certain height. When the raw material is filled to a certain height or higher, the raw material particles are pulverized due to the strong jet air sprayed from the air nozzle 24a.

In this case, the lower plate 24 may be formed of ceramic.

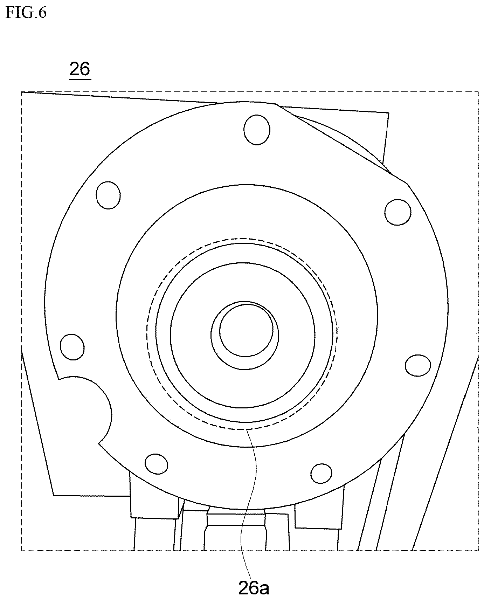

Fig. 6 is a view illustrating the cover of the milling main body in the jet mill according to the present disclosure.

The cover 26 is installed on the open upper end of the milling main body 20 to seal the upper portion of the milling main body 20.

The classifying wheel 26a may be provided on the inner side (the side facing the inside of the milling main body 20 when the cover 26 seals the milling main body 20) of the cover 26.

The raw material particles pulverized by the strong jet air sprayed from the air nozzle 24a inside the milling main body 20 are raised by the air current, and when the particle size is smaller than a certain size, the raw material particles pass through the classifying wheel 26a and then move to the product collecting section.

In addition, when the raw material particles are larger than a certain size, the raw material particles descend to the inside of the milling main body 20 again along the inner wall surface of the milling main body 20 and are pulverized by the jet air.

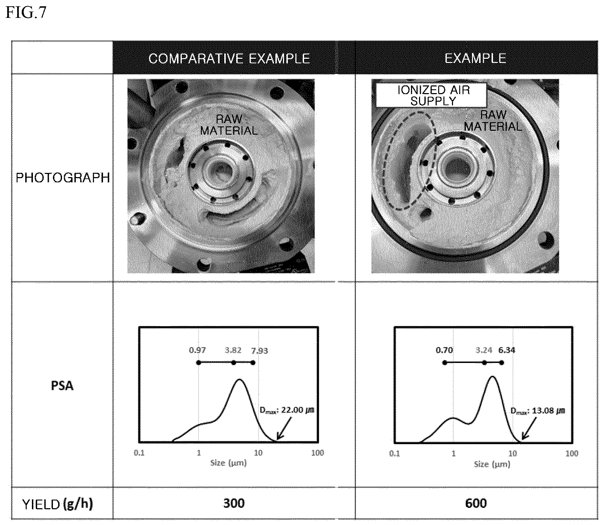

Fig. 7 is a photograph comparing an upper plate (Example) inside the milling main body of the jet mill according to the present disclosure and an upper plate (Comparative Example) inside the milling main body of the jet mill according to the prior art, and a graph illustrating the results of particle size analysis.

The ionizer 14 installed in the raw material supply pipe 12 removes static electricity of the supplied air. That is, the ionizer 14 prevents agglomeration of the raw material particles caused by static electricity of the raw material fed into the milling main body 20 and prevents the raw material particles from blocking the raw material input hole 22a of the upper plate 22, thereby preventing such clumped particles from accumulating on the upper plate 22.

When ionized air is supplied by the ionizer 14, the accumulation of raw material on the upper part of the upper plate 22 can be improved, and as illustrated in the upper end photograph (Example) on the right side of Fig. 7, it can be seen that raw material does not accumulate in the part where ionized air is supplied.

The upper end photograph (Comparative Example) on the left side of Fig. 7 illustrates a state in which raw material is accumulated on the upper plate, and the raw material input hole is blocked.

When the raw material is not accumulated on the upper portion of the upper plate 22, the raw material pulverized at the lower portion of the milling main body 20 can smoothly move (be classified) through the classifying wheel 26a located at the upper portion along the rising air current, thereby increasing the pulverization efficiency and productivity.

In addition, as illustrated in the Particle Size Analyzer (PSA) results described at the bottom of Fig. 7, it can be seen that a maximum particle size (Dₘₐₓ) of the raw material particles was reduced from 22.00 µm (Comparative Example) to 13.08 µm (Example), and a yield (g/h) was significantly improved from 300 g/h (Comparative Example) to 600 g/h (Example).

The present disclosure described above is not limited to the aforementioned examples and the attached drawings, and it will be apparent to those skilled in the art that various substitutions, modifications, and changes are possible within the scope that does not depart from the technical idea of the present disclosure.

### [Detailed Description of Main Elements]

10: raw material supply unit
12: raw material supply pipe
14: ionizer
20: milling main body
22: upper plate
24: lower plate
24a: air nozzle
26: cover
26a: classifying wheel
28: first product transfer pipe
30: cyclone
32: second product transfer pipe
40: bag filter
50: blower

## Claims

1. A jet mill in which a raw material is fed into a hollow milling main body (20) through a predetermined raw material supply pipe (12) from a raw material supply unit and the raw materials are pulverized by collision with each other due to a strong jet air sprayed from an air nozzle (24a) installed in the milling main body when the raw materials fed into the milling main body fill the milling main body to a certain height or higher,
wherein upper and lower portions of the milling main body are grounded to remove static electricity inside the milling main body, and
wherein a predetermined ionizer (14) is installed in the raw material supply pipe to supply the raw material to the raw material input holes of the upper plate and supply ionized air together, thereby preventing raw materials from accumulating on the upper plate.

2. The jet mill of claim 1, wherein a recessed lower plate is horizontally positioned on a lower side inside the milling main body, a plurality of air nozzles are installed spaced apart along an edge of the lower plate, and the air nozzles are arranged to face a center of the lower plate.

3. The jet mill of claim 2, wherein the lower plate is formed of ceramic.

4. The jet mill of claim 1, wherein a cover (26) is installed on an open upper end of the milling main body, and a classifying wheel (26a) is provided inside the cover.

5. The jet mill of claim 1, wherein an upper plate is horizontally arranged on an inner upper portion of the milling main body, one or more raw material input holes are formed vertically through the upper plate along a circumferential direction, and the raw materials supplied from the raw material supply pipe are fed into the raw material input holes.

6. The jet mill of claim 5, wherein the upper plate is formed of ceramic.

7. A method of pulverizing a sulfide-based solid electrolyte using a jet mill in which a sulfide-based solid electrolyte is fed into a hollow milling main body (20) through a predetermined raw material supply pipe (12) from a raw material supply unit (10) and the sulfide-based solid electrolytes are pulverized by collision with each other due to a strong jet air sprayed from an air nozzle (24a) installed in an inner lower portion of the milling main body when the sulfide-based solid electrolyte fed into the milling main body fills the milling main body to a certain height or higher, the method comprising:
removing static electricity inside the milling main body by grounding upper and lower portions of the milling main body, and
installing a predetermined ionizer (14) in the raw material supply pipe to supply the sulfide-based solid electrolyte inside the milling main body and supply ionized air together.

## Patentansprüche

1. Eine Strahlmühle, bei der ein Rohmaterial in einen hohlen Mahlhauptkörper (20) durch ein vorbestimmtes Rohmaterialzufuhrrohr (12) von einer Rohmaterialzufuhreinheit eingespeist wird und die Rohmaterialien durch Kollision miteinander aufgrund einer starken Strahlluft pulverisiert werden, die von einer Luftdüse (24a) gesprüht wird, die in dem Mahlhauptkörper installiert ist, wenn die Rohmaterialien, die in den Mahlhauptkörper eingespeist werden, den Mahlhauptkörper bis zu einer bestimmten Höhe oder höher füllen,
wobei obere und untere Abschnitte des Mahlhauptkörpers geerdet sind, um statische Elektrizität innerhalb des Mahlhauptkörpers zu entfernen, und
wobei ein vorbestimmter Ionisator (14) in dem Rohmaterialzufuhrrohr installiert ist, um das Rohmaterial den Rohmaterialeingabelöchern der oberen Platte zuzuführen und zusammen ionisierte Luft zuzuführen, wodurch verhindert wird, dass sich Rohmaterialien auf der oberen Platte ansammeln.

2. Strahlmühle gemäß Anspruch 1, wobei eine vertiefte untere Platte horizontal auf einer unteren Seite innerhalb des Mahlhauptkörpers positioniert ist, eine Vielzahl von Luftdüsen entlang einer Kante der unteren Platte beabstandet installiert sind und die Luftdüsen so angeordnet sind, dass sie einer Mitte der unteren Platte zugewandt sind.

3. Strahlmühle gemäß Anspruch 2, wobei die untere Platte aus Keramik gebildet ist.

4. Strahlmühle gemäß Anspruch 1, wobei eine Abdeckung (26) an einem offenen oberen Ende des Mahlhauptkörpers installiert ist und ein Sichtrad (26a) innerhalb der Abdeckung bereitgestellt ist.

5. Strahlmühle gemäß Anspruch 1, wobei eine obere Platte horizontal an einem inneren oberen Abschnitt des Mahlhauptkörpers angeordnet ist, ein oder mehrere Rohmaterialeingabelöcher vertikal durch die obere Platte entlang einer Umfangsrichtung gebildet sind und die von dem Rohmaterialzufuhrrohr zugeführten Rohmaterialien in die Rohmaterialeingabelöcher eingespeist werden.

6. Strahlmühle gemäß Anspruch 5, wobei die obere Platte aus Keramik gebildet ist.

7. Ein Verfahren zum Pulverisieren eines Festelektrolyten auf Sulfidbasis unter Verwendung einer Strahlmühle, bei der ein Festelektrolyt auf Sulfidbasis in einen hohlen Mahlhauptkörper (20) durch ein vorbestimmtes Rohmaterialzufuhrrohr (12) von einer Rohmaterialzufuhreinheit (10) eingespeist wird und die Festelektrolyte auf Sulfidbasis durch Kollision miteinander aufgrund einer starken Strahlluft pulverisiert werden, die von einer Luftdüse (24a) gesprüht wird, die in einem inneren unteren Abschnitt des Mahlhauptkörpers installiert ist, wenn der Festelektrolyt auf Sulfidbasis, der in den Mahlhauptkörper eingespeist wird, den Mahlhauptkörper bis zu einer bestimmten Höhe oder höher füllt, wobei das Verfahren Folgendes beinhaltet:
Entfernen von statischer Elektrizität innerhalb des Mahlhauptkörpers durch Erden von oberen und unteren Abschnitten des Mahlhauptkörpers, und
Installieren eines vorbestimmten lonisators (14) in dem Rohmaterialzufuhrrohr, um den Festelektrolyten auf Sulfidbasis innerhalb des Mahlhauptkörpers zuzuführen und zusammen ionisierte Luft zuzuführen.

## Revendications

1. Un broyeur à jet où une matière première est amenée jusque dans un corps principal de broyage (20) creux par un tuyau d'alimentation en matière première prédéterminé (12) depuis une unité d'alimentation en matière première et les matières premières sont pulvérisées par collision les unes avec les autres en raison d'un puissant jet d'air projeté à partir d'une buse d'air (24a) installée dans le corps principal de broyage lorsque les matières premières amenées jusque dans le corps principal de broyage remplissent le corps principal de broyage jusqu'à une certaine hauteur ou plus,
dans lequel des portions supérieure et inférieure du corps principal de broyage sont mises à la terre afin d'éliminer l'électricité statique à l'intérieur du corps principal de broyage, et
dans lequel un ioniseur prédéterminé (14) est installé dans le tuyau d'alimentation en matière première afin d'alimenter en matière première les trous d'entrée de matière première de la plaque supérieure et de fournir conjointement de l'air ionisé, empêchant ainsi les matières premières de s'accumuler sur la plaque supérieure.

2. Le broyeur à jet de la revendication 1, dans lequel une plaque inférieure en creux est positionnée horizontalement sur un côté inférieur à l'intérieur du corps principal de broyage, une pluralité de buses d'air sont installées espacées les unes des autres le long d'un bord de la plaque inférieure, et les buses d'air sont agencées pour faire face à un centre de la plaque inférieure.

3. Le broyeur à jet de la revendication 2, dans lequel la plaque inférieure est formée en céramique.

4. Le broyeur à jet de la revendication 1, dans lequel un couvercle (26) est installé sur une extrémité supérieure ouverte du corps principal de broyage, et une roue de sélection (26a) est prévue à l'intérieur du couvercle.

5. Le broyeur à jet de la revendication 1, dans lequel une plaque supérieure est agencée horizontalement sur une portion supérieure interne du corps principal de broyage, un ou plusieurs trous d'entrée de matière première sont formés verticalement à travers la plaque supérieure le long d'une direction circonférentielle, et les matières premières arrivant par le tuyau d'alimentation en matière première sont amenées jusque dans les trous d'entrée de matière première.

6. Le broyeur à jet de la revendication 5, dans lequel la plaque supérieure est formée en céramique.

7. Un procédé de pulvérisation d'un électrolyte solide à base de sulfure utilisant un broyeur à jet où un électrolyte solide à base de sulfure est amené jusque dans un corps principal de broyage (20) creux par un tuyau d'alimentation en matière première prédéterminé (12) depuis une unité d'alimentation en matière première (10) et les électrolytes solides à base de sulfure sont pulvérisés par collision les uns avec les autres en raison d'un puissant jet d'air projeté à partir d'une buse d'air (24a) installée dans une portion inférieure interne du corps principal de broyage lorsque l'électrolyte solide à base de sulfure amené jusque dans le corps principal de broyage remplit le corps principal de broyage jusqu'à une certaine hauteur ou plus, le procédé comprenant :
l'élimination de l'électricité statique à l'intérieur du corps principal de broyage en mettant à la terre des portions supérieure et inférieure du corps principal de broyage, et l'installation d'un ioniseur prédéterminé (14) dans le tuyau d'alimentation en matière première afin d'alimenter en électrolyte solide à base de sulfure l'intérieur du corps principal de broyage et de fournir conjointement de l'air ionisé.
